(19) Europäisches Patentamt

European Patent Office

Office européen des brevets

(11) EP 0 812 641 A1

(12) EUROPEAN PATENT APPLICATION

(43) Date of publication:
17.12.1997 Bulletin 1997/51

(51) Int. Cl.⁶: **B23B 29/02**

(21) Application number: 96304343.5

(22) Date of filing: 10.06.1996

(84) Designated Contracting States:
DE FR GB

(71) Applicants:
• KABUSHIKI KAISHA KOBE SEIKO SHO
Kobe-shi Hyogo-ken 651 (JP)
• YAMAZAKI MAZAK KABUSHIKI KAISHA
Niwa-gun Aichi-ken (JP)

(72) Inventors:
• Fujiura, Takayasu,
c/o Kobe Corp. Res. Lab.
Kobe-shi, Hyogo-ken, 651-22 (JP)
• Ueda, Hiroki,
c/o Kobe Corp. Res. Lab.
Kobe-shi, Hyogo-ken, 651-22 (JP)
• Kobayashi, Takahiro,
c/o Kobe Corp. Res. Lab.
Kobe-shi, Hyogo-ken, 651-22 (JP)

• Yamaoka, Yoshinori,
c/o Yamazaki Mazak K.K.
Niwa-gun, Aichi-ken (JP)
• Shimizu, Norihiko,
c/o Yamazaki Mazak K.K.
Niwa-gun, Aichi-ken (JP)
• Nakahira, Shinichi,
Yamazaki Mazak K.K.
Niwa-gun, Aichi-ken (JP)
• Koizumi, Takayuki
Hyogo, 665 (JP)
• Fujii, Toru
Sakyo-ku, Kyoto-shi, Kyoto, 606 (JP)

(74) Representative: Dowden, Marina
Elkington and Fife
Prospect House,
8 Pembroke Road
Sevenoaks, Kent TN13 1XR (GB)

(54) **Boring bar**

(57) A boring bar capable of carrying a cutting tip at a forward end thereof comprises a main body made of a fiber-reinforced composite material and a restraint member provided in the main body, the restraint member having a higher Young's modules than that of the main body and extending along a longitudinal direction of the boring bar, and at least a portion of the restraint member exposing to an external surface of said main body. This construction gives high rigidity to the main body, reduces its static deflection during a boring operation and provides capabilities to prevent chattering vibrations and achieve high cutting accuracy at the same time even when the ratio of the boring bar's projecting length to width is increased.

FIG. 1B

FIG. 1A

## Description

## BACKGROUND OF THE INVENTION

### 1. Field of the Invention

The present invention relates to a boring bar utilized when performing boring operations as a machine tool. This invention relates more particularly to a structure of a boring bar enabling to increase a ratio of a projection from its clamped point to a diameter of the boring bar.

### 2. Description of the Related Art

A boring bar used in a machine tool for boring a workpiece becomes more likely to produce chattering vibration when the ratio of the boring bar's projecting length L from its clamping point to the diameter D of the boring bar, the ratio L/D, becomes larger.

This chattering vibration can cause such problems as deterioration of smoothness of a machined surface of the workpiece and a decrease in the useful life of a cutting tip attached to an end of the boring bar. A conventional approach devised for preventing chattering vibration when the ratio L/D is large is to use a sintered carbide boring bar made of a high-rigidity cemented carbide material or various types of vibration-restraining boring bar equipped with a vibration-restraining mechanism in the boring bar's main body, for instance.

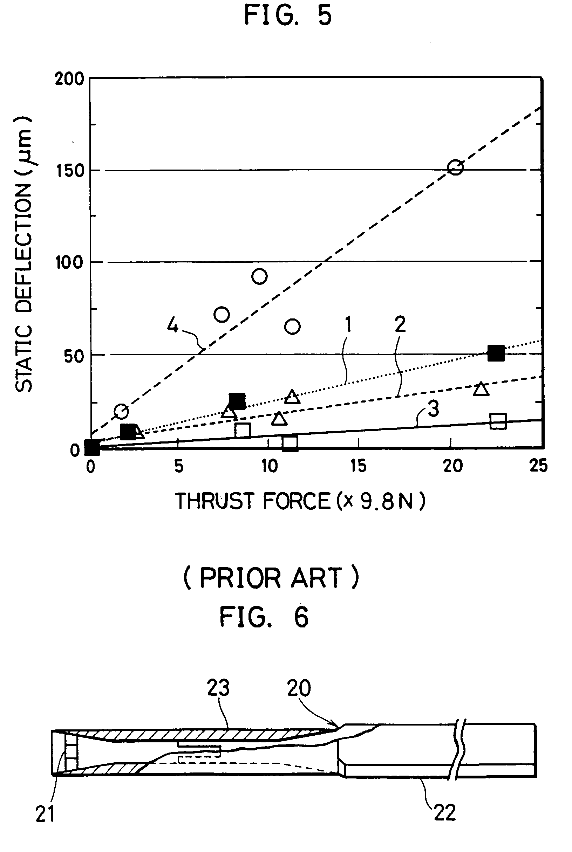

Another conventional approach is disclosed in Japanese Unexamined Utility Model Publication No. 5-39806 (hereinafter referred as JP 5-39806), in which a fiber-reinforced composite material is used to construct a boring bar's main body to increase its rigidity. As shown in Fig. 6, this type of boring bar comprises a shaft like steel core 20 having a tip mounting portion 21 holding a tip at its extreme forward end and a clamping portion 22 at a rear end as well as a shell 23 made of carbon fiber reinforced plastics (CFRP) covering the steel core 20 just between its tip mounting portion 21 and clamping portion 22. The boring bar's main body has a high natural frequency because the CFRP used to form the shell 23 has high rigidity and small relative density. In addition, since the CFRP has a large loss factor which represents the material's vibration damping characteristics compared to steel, the loss factor of the whole boring bar becomes larger than an all-steel, solid boring bar. This structure in Fig. 6 makes it possible to suppress chattering vibration of the boring bar.

When the value of L/D of a boring bar is made large, it becomes necessary to reduce its static deflection occurring during a boring operation for preventing deterioration of cutting precision and to increase rigidity and natural frequency of the boring bar for suppressing its chattering vibration.

The boring bars in the prior art technology described above are however associated with the following problems.

For instance, the aforementioned sintered carbide boring bar becomes too heavy when its diameter is increased because the high-rigidity cemented carbide material used has large weight per unit volume, i.e., density, which would result in inconvenience in handling tools.

The aforementioned vibration-isolating boring bar is expensive and requires delicate preoperational adjustment due to its complicated construction.

On the other hand, the boring bar having the shell made of such a fiber-reinforced composite material as the CFRP as disclosed in JP 5-39806 is improved as its L/D ratio can range from 4 to 5 while using conventional boring bars the ration L/D ranges from 3 to 4. When a fiber-reinforced composite material, CFRP, used in this type of boring bar is bent along its longitudinal axis, a difference in rigidity between fibers and matrix resin causes shearing distortion of the matrix resin which is located between the fibers. Although equivalent elastic modulus of the fiber-reinforced composite material decreases due to shearing distortion if it is subjected to a bending stress, vibration damping characteristics of the material is enhanced, resulting in the aforementioned improvement in L/D values.

Recent studies have however revealed that it is possible for further increasing the L/D value to avoid the decrease in equivalent elastic modulus by restraining shearing distortion of the fiber-reinforced composite material caused by bending along its longitudinal axis. In addition, another important factor affecting to restrain the sharing distortion is the shape of the steel core. More particularly, it has been found that a pending issue was to develop an improved boring bar which would more effectively restrain shearing deformation of matrix resin caused by bending of a fiber-reinforced composite material constituting the boring bar's main body in order to obtain a large L/D value.

## SUMMARY OF THE INVENTION

The present invention has been made to overcome the aforementioned problems of the prior art. It is therefore an object of the invention to provide a boring bar featuring increased rigidity and reduced static deflection by effectively restraining shearing deformation of the matrix resin of a fiber-reinforced composite material which constitutes the boring bar's main body. As a result, it achieves chattering-free cutting operations even when the boring bar has a large L/D value.

Accordingly, this invention is directed to a boring bar capable of carrying a cutting tip at a forward end thereof comprising: a main body made of a fiber-reinforced composite material and a restraint member provided in the main body, the restraint member having a higher Young's modules than that of the main body and extending along a longitudinal direction of the boring bar, and at least portion of the restraint member exposing to an external surface of said main body.

Since the aforementioned restraint member is provided in the main body of the shank along a longitudinal direction of the boring bar of the invention, it is possible to increase the rigidity of the shank's main body by restraining shearing distortion of a matrix resin used in the fiber-reinforced composite material and thereby prevent chattering vibrations. In addition, a clamping jig used for holding the shank (or a main body) comes into contact not only with the fiber-reinforced composite material but also with the restraint member because each side face of the restraint plate member are exposed to the curved external surface of the main body. With this construction, slippage between the shank and clamping jig is less likely to occur during a boring operation.

The invention, therefore, provides high rigidity of the shank (or a main body), effective reduction in chattering vibrations, positive holding of the shank by the clamping jig, and eventual improvements in cutting accuracy and efficiency.

Note that the rigidity in this context is classified into tow categories, one is rigidity in the static state (hereinafter also referred to as static rigidity) and the other is rigidity in the dynamic state (hereinafter also referred to as dynamic rigidity). The rigidity, in static and dynamic states, of the boring bar is substantially determined by an equivalent elastic module of the boring bar. More particularly, the static rigidity represents a resistance to a static load applied to the boring bar and the dynamic rigidity relates to a natural frequency of the boring bar which allow us to predict at which frequency a chattering vibration occurs. It can be generally said that higher the natural frequency of the boring bar, the higher the frequency it requires to cause the bar a chattering vibration. Therefore, the boring bar with a higher dynamic rigidity can avoid the chattering vibration effectively when it is subjected to the boring operation.

In accordance with a second structure of the present invention, the restraint member has a rectangular cross section having a short side and a long side, the long side of the restraint member extends parallel to a direction of the principal force generated during a boring operation.

This structure serves to effectively increase the rigidity of the main body in the direction of the principal cutting force.

In accordance with a third structure of the present invention, the restraint member is arranged such that a sectional modulus of the restraint member with respect to a first line extending through a cross sectional center thereof parallel to a direction of a principal force generated during a boring operation is smaller than that of the restraint member with respect to a second line going through the cross sectional center of the restraint member which is perpendicular to the first line.

This structure provides a boring bar with a restraint member arranged in the main body such that a sectional modulus of the restraint member which is an indicative of resistance against the bending moment caused mainly by a principal force applied on the cutting tip during the boring operation. With this configuration, the sectional modulus of the restraint member with respect to the second line referred as a reference line becomes larger value thus it provides a higher resistance against the bending moment. It, therefore, provides a higher rigidity against the principal force for the main body of the boring bar.

In accordance with a fourth structure of the present invention, said restraint member having a cruciform cross section with four arms outwardly extending from a center of the cruciform cross section.

In accordance with a fifth structure of the present invention, the restraint member is arranged in such a way that two opposing arms extending substantially parallel to a direction of a principal force generated during a cutting operation and the other two opposing arms extending substantially parallel to a direction of a thrust force generated during a cutting operation.

This structure serves to effectively increase the rigidity of the main body in the directions of the principal and thrust forces and reduce static deflection of the boring bar during a boring operation. Note that the thrust force is mainly generated by a feeding operation of the boring bar during the cutting operation while the principal force is generated by a force in the tangential direction produced on the cutting tip during the cutting operation.

In accordance with a sixth structure of the present invention, the restraint plate extends in a longitudinal direction of the boring bar from one end to an opposite end of the main body.

In accordance with a seventh structure of the present invention, a boring bar further comprises a head member attachable to a forward end of the main body, and being attached with a cutting tip.

In accordance with another structure of the present invention, the restraint member is made of a metallic plate or a ceramic material.

The restraint member provides high rigidity and slip free positive holding of the main body by the clamping jig as its metallic surface comes into contact not only with the fiber-reinforced composite material but also with the metallic or ceramic made restraint member.

Accordingly, the boring bar in the aforementioned structure improves its rigidity ( a static rigidity and a dynamic rigidity) by effectively increasing its equivalent elastic module. The rigidity in both static state and dynamic state is improved with the boring bar according to this invention thus the cutting performance can be effectively improved.

These and other objects, features and advantages of the invention will become more apparent upon reading the following detailed description of preferred embodiments with referencing to the following drawings.

**BRIEF DESCRIPTION OF THE DRAWINGS**

FIG. 1A is a partially cutaway view illustrating the construction of a boring bar according to a first embodiment of the invention;

FIG. 1B is a cross-sectional view taken along lines IB-IB shown in FIG. 1A;

FIG. 2A is a partially cutaway view illustrating the construction of a boring bar according to a second embodiment of the invention;

FIG. 2B is a cross-sectional view taken along lines IIB-IIB shown in FIG. 2A;

FIG. 3 is a partially cutaway view illustrating the construction of a boring bar according to an alternate form of embodiment of the invention;

FIG. 4A is a graph depicting a chattering vibration waveform observed in a boring operation test of the boring bar of the second embodiment;

FIG. 4B is a graph depicting a chattering vibration waveform observed in a boring operation test of a conventional boring bar as a comparative example;

FIG. 5 is a graph depicting relationships between depth of cut and static deflection in the direction of a thrust force obtained in boring operation tests of different types of boring bars;

FIG. 6 is a partially cutaway view illustrating the construction of a conventional boring bar using a fiber-reinforced composite material;

Fig.7A is a side view showing an orientation of a restraint member with respect to a direction of a principal force applied on a cutting tip;

Fig. 7B is a side view showing another orientation of a restraint member with respect to a direction of a principal force applied on a cutting tip.

## DETAILED DESCRIPTION OF THE PREFERRED EMBODIMENTS

Preferred embodiments of the invention will now be described with reference to the accompanied drawings.

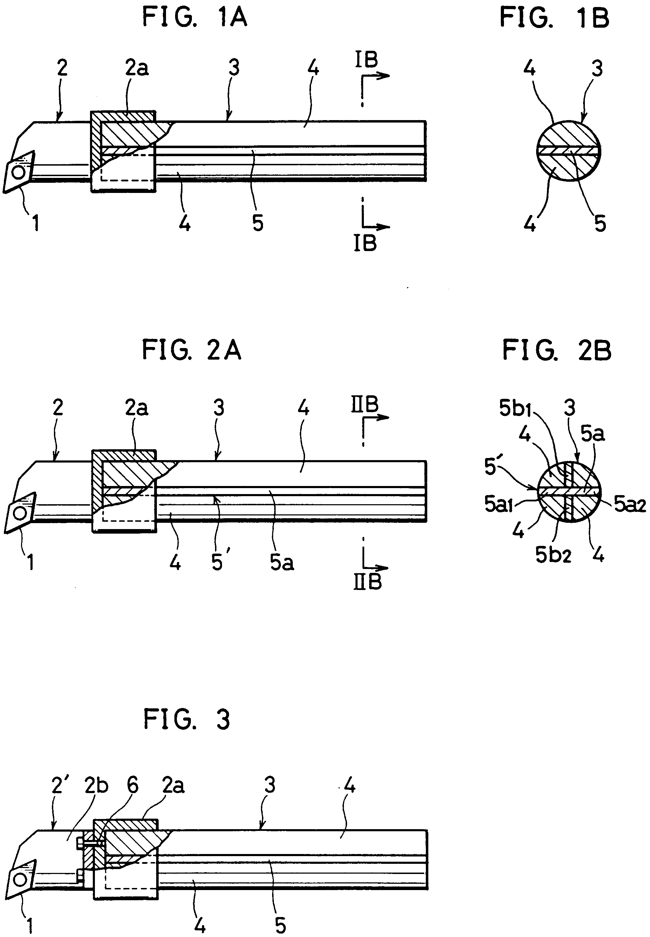

FIG. 1A is a partially cutaway view illustrating the construction of a boring bar according to a first embodiment of the invention while FIG. 1B is a cross-sectional view taken along lines IB-IB shown in FIG. 1A.

The boring bar of this embodiment comprises a shaftlike shank 3, a head 2 provided at one end of the shank 3 and a cutting tip 1 attached to an extreme end of the head 2, as shown in FIGS. 1A and 1B.

The shank 3 comprises a cylindrical body 4 (or a main body)and a strip-shaped restraint plate 5 (or a restraint member) embedded in the cylindrical body 4 with both side faces of the restraint plate 5 exposed to the curved external surface of the cylindrical body 4. The head 2 having a cap-like socket 2a at its rear end is joined to the forward end of the shank 3.

In making the boring bar of this embodiment, a long, straight CFRP rod having approximately a semicircular cross section was produced by a protrusion process. On the other hand, the restraint plate 5 measuring 1 mm thick '16 mm wide '150 mm long was made of sheet steel. The shank 3 was produced by bonding a pair of CFRP rods individually cut to a length of 150 mm to both sides of the restraint plate 5 so that the restraint plate 5 is sandwiched between two CFRP semicylindrical elements of the cylindrical body 4 as shown in FIG. 1.

The socket 2a of the head 2 which was prepared separately was firmly bonded to the forward end of the shank 3 by use of an adhesive and the cutting tip 1 was attached to the extreme end of the head 2 to complete the boring bar. In the boring bar of the first embodiment thus constructed, the cutting tip 1 is attached in such a way that the restraint plate 5 becomes parallel to the direction of a principal cutting force of the cutting tip 1 in a cutting operation.

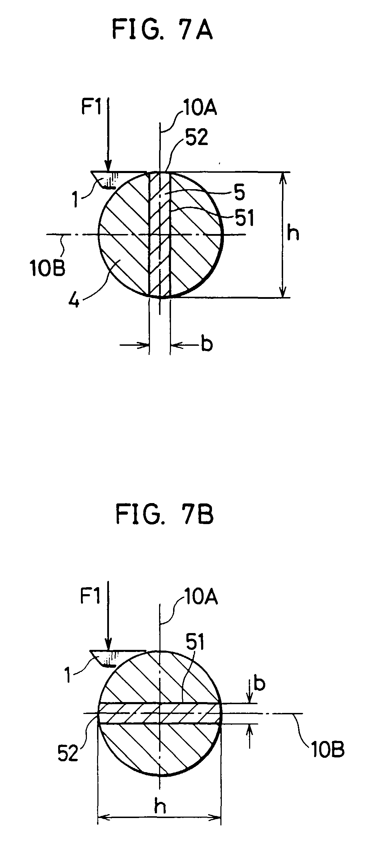

As can be more clearly seen from Figs 7A and 7B, sectional modules in two cases can be compared.

In Fig. 7A, the restraint plate 5 has a rectangular cross sectional shape with a short side b and a long side h, then sectional modulus Z1 of the restraint plate member 5 with respect to a line 10B perpendicular to a line 10A which is parallel to the direction of the principal force F1 generated on the cutting tip is expressed as:

$$Z1 = (b*h**2)/6$$

where    b is a thickness of the restraint member;
         h is a width of the restraint member.

Similarly, the sectional modulus for the restraint plate member with respect to the same line 10B as shown in Fig. 7B can be expressed as:

$$Z2 = (h*b**2)/6$$

where    b is a thickness of the restraint member;
         h is a width of the restraint member.

Assuming a thickness of the plate b is much smaller than a width of the plate h, for instance 3*b < h , then it apparently results that Z1 becomes larger than Z2. This leads to the conclusion that the boring bar with the restraint plate member in the orientation shown in Fig. 7A (a long side 51 of the restraint member 5 is parallel to a direction of the principal force F1) has a higher resistance against bending load than the one shown in Fig. 7B (a short side 52 is substantially parallel to a direction of the principal force F1). As a result, the configuration shown in Fig. 7A has an advantage of rigidity against the bending moment generated by a principal force.

In this embodiment, the CFRP was made by using petroleum pitch carbon fibers GRANOC XN-70 (manufactured by Nippon Oil Co., Ltd.) having a longitudinal modulus of 686 GPa (70 tonf/mm$^2$) as reinforcing fibers and a 100:90:2 mixture of epoxy resin ARALDYTE LY556 (manufactured by) and two kinds of curing agents, i.e., acid anhydride HY917 (manufactured by Chiba-Geigy Ltd.) and tertiary amine DY062 (manufactured by Chiba-Geigy Ltd.), as a matrix resin.

Used in the protrusion process for forming the aforementioned CFRP rod was a heating mold associated with a temperature regulator. The heating mold had about an 80 cm long cavity having approximately a semicircular cross section (7.5 mm in diameter and 8 mm in radius of curvature) cut away from a circle of a 16 mm diameter leaving its 1 mm thick diametrical portion. A specified number of carbon fibers were impregnated with the aforementioned matrix resin in a resin tank provided just before a molding stage to obtain a volumetric fiber content (Vf) of 60%. The resin-impregnated fibers were then passed through the cavity of the heating mold and continuously drawn out at a speed of 0.1 m/minute while curing the matrix resin at 180°C to produce the CFRP rod.

On the other hand, sheet steel (equivalent to S45C) having a longitudinal modulus (or Young's modules) of 206 GPa (21,000 kgf/mm$^2$) was used to produce the restraint plate 5. Used for bonding the cut CFRP rods to this restraint plate 5 was a two-part epoxy adhesive, which was cured by leaving the shank 3 for 8 hours at room temperature. The head 2 was bonded to the shank 3 by using the same epoxy adhesive and curing method.

A boring bar according to a second embodiment of the invention is now described in the following.

FIG. 2A is a partially cutaway view illustrating the construction of the boring bar according to the second embodiment of the invention while FIG. 2B is a cross-sectional view taken along lines IIB-IIB shown in FIG. 2A. The boring bar of this embodiment is same as that of the first embodiment except for the configuration of the restraint plate . Accordingly, same reference numerals are used to designate equivalent elements, and the following explanation focuses on how the second embodiment differs from the first embodiment.

In the boring bar of the second embodiment shown in FIGS. 2A and 2B, a main restraint plate 5a (also referred as a first member) and a pair of transverse restraint plates 5b, 5b (also referred as a second member) individually made of sheet steel are combined such that the transverse restraint plates 5b, 5b welded to the main restraint plate 5a at right angles along their longitudinal center lines. As a restraint plate unit 5' formed by joining the main restraint plate 5a and transverse restraint plates 5b, 5b is embedded in a cylindrical body 4 (or a main body) along its longitudinal axis, it forms a cruciform pattern inscribed within a circle of a 16 mm diameter in cross section, with side faces of the restraint plates 5a, 5b, 5b exposed to the curved external surface of the cylindrical body 4. In more particularly, the cross section of the restraint plate unit 5' is consisted of four arms extending outwardly from the center thereof, namely 5a1,5a2, 5b1, and 5b2 as shown in Fig. 2B.

A CFRP rod used for constructing the cylindrical body 4 was made of the same materials and by the protrusion process under the same conditions as the first embodiment. In producing the CFRP rod, the materials were passed through a heating mold of which cavity had a quadrantal cross section (7.5 mm in diameter and 8 mm in radius of curvature) cut away from a circle of a 16 mm diameter leaving its 1 mm thick diametrical portions. The main restraint plate 5a and a pair of transverse restraint plates 5b, 5b were made by using sheet steel of the same contents and thickness as the first embodiment, and they were welded together to form the one-piece restraint plate unit 5'.

A shank 3 was produced by bonding four pieces of CFRP rods individually cut from the aforementioned CFRP rod to a length of 150 mm to four interior angles of the restraint plate unit 5' using the same process as the first embodiment. Accordingly, the shank 3 is embedded with the restraint plate unit 5' having a cruciform section along the cylindrical body 4 of CFRP.

A socket 2a of a separately prepared head 2 was firmly bonded to a forward end of the shank 3 by use of an adhesive in the same way as the first embodiment and a cutting tip 1 was attached to an extreme end of the head 2 to complete the boring bar. In the boring bar of this embodiment, the cutting tip 1 is attached in such a way that the main restraint plate 5a consisting of the arms 5a1, 5a2 of the restraint plate unit 5' becomes parallel to the direction of a principal cutting force F1 ( see also Fig. 7A )of the cutting tip 1 during a cutting operation and the transverse restraint plates (or two opposing arms 5b1 and 5b2 in Fig.2B ) becomes parallel to the direction of a thrust force.

The boring bars of the first and second embodiments individually fixed with a projecting length of 96 mm were subjected to impact tests and boring operation tests.

To allow a comparison between the boring bars of the embodiments and conventional boring bars, three comparative examples were prepared. These comparative examples individually employed a carbon steel (S45C) solid shank (comparative example 1), a sintered carbide solid shank (comparative example 2) and a shank having a steel core covered with a CFRP shell (comparative example 3). Measuring 16 mm in diameter, these shanks were individually fitted with the same head and cutting tip as used in the first and second embodiments, and boring bars thus produced were subjected to the same impact tests and boring operation tests.

First, the individual boring bars were fixed with a projecting length of 96 mm and their natural frequencies were measured in this condition. Specifically, an acceleration sensor was fitted to the extreme forward end of each boring bar's cutting tip and the cutting tip's foremost point was stricken in a normal bending direction of each boring bar. A primary bending natural frequency f of each boring bar was derived from a resultant free vibration waveform signal by using a fast Fourier transform (FFT) analyzer (Model CF350 manufactured by Ono Sokki Co., Ltd.). Measurement results are shown in Table 1 below.

### Table 1

| Type of boring bar | Natural frequency (Hz) |
|---|---|
| First embodiment | 1800 |
| Second embodiment | 1800 |
| Comparative example 1 | 1200 |
| Comparative example 2 | 1600 |
| Comparative example 3 | 1600 |

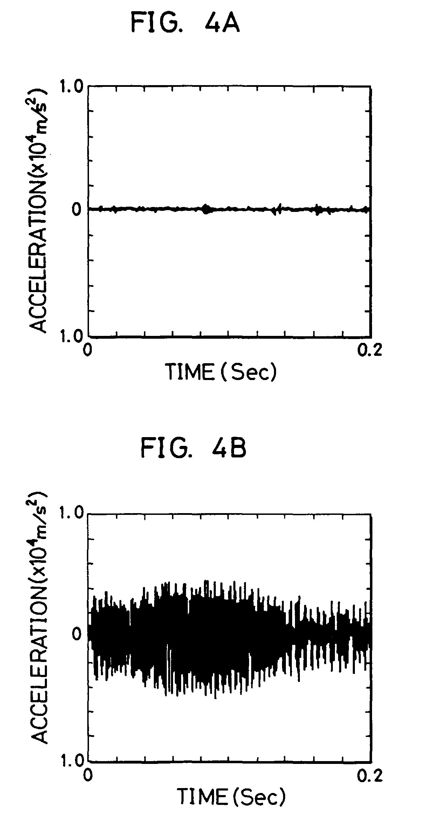

Next, each of the above boring bars was subjected to a boring operation test under the same test conditions, in which each boring bar was advanced at a feed speed of 0.08 mm/revolution and a workpiece was rotated at a cutting speed of 150 m/minute until a depth of cut 0.1 mm is obtained. Plotted in graphs of FIGS. 4A and 4B are acceleration values vs. Time of the extreme forward ends of the boring bars of the second embodiment and comparative example 3 respectively, and the waveforms shown represent chattering vibrations of these boring bars.

As seen from FIG. 4B, the boring bar of comparative example 3 showed noticeable chattering vibrations, as shown by using the boring bars of the other two comparative examples.

Unlike the comparative examples, the boring bar of the second embodiment did not show chattering vibrations as recognized in FIG. 4A, and the boring bar of the first embodiment did not show chattering vibrations either.

Shown in Table 2 below are critical non-chattering projection ratios, or permissible L/D values, of the individual boring bars obtained from the results of the boring tests.

### Table 2

| Type of boring bar | Critical projection ratio (L/D) |
|---|---|
| First embodiment | 6 |
| Second embodiment | 6-7 |
| Comparative example 1 | 4 |
| Comparative example 2 | 5 |
| Comparative example 3 | 5 |

FIG. 5 shows relationships between depth of cut and static flexure in the direction of a thrust force obtained in the boring operation tests of different types of boring bars. In FIG. 5, solid square symbols show plots for the second embodiment ( denoted by a line 3 ), open triangle symbols show plots for comparative example 1 (denoted by a line 2 ), open square symbols show plots for comparative example 2 ( denoted by a line 1 ), and open circular symbols show plots for comparative example 3 ( denoted by a line 4 ).

As can be apparent from FIG. 5, the boring bar of comparative example 3 whose shank was constructed with a steel core covered with a CFRP shell showed low static rigidity, a large amount of flexural distortion in the direction of a thrust force and low cutting accuracy. On the other hand, the boring bar of the second embodiment of the invention showed an almost same level of static rigidity as the boring bar of comparative example 1 having a carbon steel solid shank and that of comparative example 2 having a sintered carbide solid shank, as well as a small amount of flexural distortion in the direction of a thrust force and high cutting accuracy.

As described above, the boring bars of the above embodiments employing the steel-made restraint plates provided lengthwise in their shanks made it possible to increase rigidity by restraining shearing distortion of the matrix resin of the CFRP which is used to construct the main bodies of the shanks. In addition, it was possible to prevent slippage between the boring bars and their clamping jigs because both side faces of each restraint plate were exposed to the curved external surface of each shank. All this served to provide high cutting accuracy and effectively suppress chattering vibrations, eventually providing excellent advantages of the invention.

While the head 2 carrying the cutting tip 1 was bonded to the shank 3 by use of an adhesive in producing the boring bar of the second embodiment, it is to be understood that the above construction is illustrative of the invention. The head 2 may be made detachable from the shank 3 together with the cutting tip 1 if the construction is modified as shown in FIG. 3, for example.

FIG. 3 is a partially cutaway view illustrating the construction of a boring bar according to a varied form of embodiment of the invention. This boring bar has the same configuration as the boring bar of the second embodiment except for its head and shank connecting method. Accordingly, same reference numerals are used to designate equivalent elements, and the following explanation focuses on differences between the two boring bars.

In the boring bar of FIG. 3, a head 2' has a cap-like socket 2a and a neck 2b which includes a mounting flange provided at its rear end. The neck 2b is joined to the socket 2a by means of a plurality of fixing bolts 6 in such a manner that the neck 2b carrying a cutting tip 1 can be detached even after the socket 2a has been bonded to the forward end of a shank 3 by use of an adhesive.

In the above-described embodiments, the CFRP rods having a semicircular or quadrantal cross section produced by the protrusion process were bonded to external surfaces of a strip-shaped restraint plate or a pair of mutually intersecting restraint plates. In an alternative approach, a shank may be produced by forming a cylindrical CFRP rod readily having a strip-shaped or cruciform cavity in cross section by the protrusion process, inserting and bonding a strip-shaped restraint plate or a pair of mutually intersecting restraint plates into the cavity, and grinding the curved external surface of the CFRP rod.

Although the CFRP rods used in the main bodies of the shanks of the above-described embodiments were produced by the protrusion process, other processes may be used to produce them. For example, a shank may be produced by directly or separately applying resin-impregnated unidirectional prepreg to a strip-shaped restraint plate or a pair of mutually intersecting restraint plates by a rolling process and then pressurizing and hardening the prepreg in an autoclave or other facility. Alternatively, a CFRP layer may be formed around a strip-shaped restraint plate or a pair of mutually intersecting restraint plates by a filament winding process. In a yet alternative approach, these CFRP forming processes may be used in combination to form a CFRP shell of a shank.

Although the foregoing embodiments employed as a fiber-reinforced composite material the CFRP containing petroleum pitch carbon fibers and an epoxy resin, contents of the fiber-reinforced composite material to be used in this invention is not limited to this combination. For example, it is possible to use as reinforcing fibers coal pitch carbon fibers, polyacrylonitrile (PAN) carbon fibers, high-modulus organic fibers, high-modulus metallic fibers, high-modulus inorganic fibers, or a mixture of these fibers. In any case, it is preferable to use reinforcing fibers having a high modulus of elasticity in the light of the field of the invention.

On the other hand, the matrix resin is not limited to the epoxy resin based compound used in the earlier described embodiments, but its contents may be altered or adjusted depending on the CFRP forming process or economic efficiency. Also, a thermosetting resin such as a polyester resin or an acrylic resin which is applicable as a fiber-reinforced composite material may be used instead of the epoxy resin. Furthermore, various kinds of filler, plasticizer, mold-release compound or flexibilizer may be added to resin contents in order to give such additional properties as heat resistance or impact resistance to the fiber-reinforced composite material or to improve moldability or economic efficiency.

While the restraint plates of the foregoing embodiments were made of sheet steel, it is simply an illustrative form of the invention. It is possible to use other high-elasticity materials to construct restraint plates as long as they have a higher bending modulus than the fiber-reinforced composite material used in the main body of the shank and can effectively restrain shearing distortion of the matrix resin of the fiber-reinforced composite material. These materials would include, for instance, alloy steel, aluminum alloys and other metallic materials as well as ceramic materials.

Furthermore, although a main restraint plate 5a and a pair of strip shaped restraint plates 5b, 5b were welded together to construct the restraint plate unit 5' having a cruciform section in the aforementioned second embodiment, it is only illustrative of the invention. This form of restraint plate member can alternatively be made by a pair of two identical strip-shaped restraint plates; each of which forms a slit therein extending along the longitudinal center line thereof from one end to a halfway through the restraint plate; combined together such that the bottom ends of the slits come into contact and welded together at right angles with each other. This form of one-piece restraint plate member can also be made by machining a metallic round bar into a shape having a cruciform section or by an extrusion process. A one-piece restraint plate member can also be made of a ceramic material by using a powder molding process.

While the invention has been illustrated with respect to several specific embodiments thereof, these embodiments should be considered as illustrative rather than limiting. Various modifications and additions may be made and will be apparent to those skilled in the art without departing from the spirit and scope of the present invention. Accordingly, the invention should not be limited by the foregoing description but rather should be defined only by the following claims.

## Claims

1. A boring bar capable of carrying a cutting tip at a forward end thereof comprising:

   a main body made of a fiber-reinforced composite material and
   a restraint member provided in the main body, the restraint member having a higher Young's modules than that of the main body and extending along a longitudinal direction of the boring bar, and at least portion of the restraint member exposing to an external surface of said main body.

2. A boring bar according to claim 1, wherein the restraint member has a rectangular cross section having a short side and a long side, the long side of the restraint member extends parallel to a direction of the principal force generated during a boring operation.

3. A boring bar according to claim 2, wherein the restraint member is arranged such that a sectional modulus of the restraint member with respect to a first line extending through a cross sectional center thereof parallel to a direction of a principal force generated during a boring operation is smaller than that of the restraint member with respect to a second line going through the cross sectional center of the restraint member which is perpendicular to the first line.

4. A boring bar according to claim 3, wherein said restraint member having a cruciform cross section with four arms outwardly extending from a center of the cruciform cross section.

5. A boring bar according to claim 4, wherein, the restraint member is arranged in such a way that two opposing arms extending substantially parallel to a direction of a principal force generated during a cutting operation and the other two opposing arms extending substantially parallel to a direction of a thrust force generated during a cutting operation.

6. A boring bar according to claim 2 or 4, wherein the restraint plate extends in a longitudinal direction of the boring bar from one end to an opposite end of the main body.

7. A boring bar according to claim 1 or 4, further comprising a head member attachable to a forward end of the main body, and being attached with a cutting tip.

8. A boring bar according to claim 1 or 4, wherein the restraint member is made of a metallic plate.

9. A boring bar according to claim 1 or 4, wherein the restraint member is made of a ceramic material.

FIG. 1A

FIG. 1B

FIG. 2A

FIG. 2B

FIG. 3

## FIG. 4A

## FIG. 4B

## FIG. 5

## ( PRIOR ART )

## FIG. 6

## FIG. 7A

## FIG. 7B

## DOCUMENTS CONSIDERED TO BE RELEVANT

| | European Patent Office | EUROPEAN SEARCH REPORT | Application Number EP 96 30 4343 |
|---|---|---|---|

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 95, no. 011 & JP-A-07 290305 (KOBE STEEL LTD), 7 November 1995, * abstract * --- | 1 | B23B29/02 |
| A | US-A-2 842 014 (PAUL H. MILLER) * column 2, line 12 - line 17; figures 1,2 * ----- | 1 | |
| | | | TECHNICAL FIELDS SEARCHED (Int.Cl.6) B23B |

The present search report has been drawn up for all claims

| Place of search | Date of completion of the search | Examiner |
|---|---|---|
| THE HAGUE | 20 November 1996 | Rambaud, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)